Europäisches Patentamt

(19) European Patent Office

Office européen des brevets

(11) **EP 1 002 009 B1**

(12) **FASCICULE DE BREVET EUROPEEN**

(45) Date de publication et mention
de la délivrance du brevet:
**24.09.2003 Bulletin 2003/39**

(21) Numéro de dépôt: **98941515.3**

(22) Date de dépôt: **31.07.1998**

(51) Int Cl.⁷: $C08J\ 11/08$, $B29B\ 17/00$
// $C08L25:06$

(86) Numéro de dépôt international:
**PCT/FR98/01715**

(87) Numéro de publication internationale:
**WO 99/007776 (18.02.1999 Gazette 1999/07)**

(54) **TRANSFORMATION DE POLYMERES EXPANSES**

UMWANDLUNG VON GESCHÄUMTEN POLYMEREN

TRANSFORMATION OF EXPANDED POLYMERS

(84) Etats contractants désignés:
**AT BE CH CY DE DK ES FI FR GB GR IE IT LI LU
MC NL PT SE**

(30) Priorité: **04.08.1997 FR 9709966**

(43) Date de publication de la demande:
**24.05.2000 Bulletin 2000/21**

(73) Titulaire: **ESKA
75011 Paris (FR)**

(72) Inventeur: JURA, Patrick
**F-02600 Haramont (FR)**

(74) Mandataire: **Santarelli
14, avenue de la Grande Armée,
B.P. 237
75822 Paris Cedex 17 (FR)**

(56) Documents cités:
**EP-A- 0 739 930          WO-A-95/09196
DE-A- 4 215 113          US-A- 5 223 543
US-A- 5 232 954**

• **DATABASE WPI Section Ch, Week 9735 Derwent
Publications Ltd., London, GB; Class A13, AN
97-381356 XP002063704 & JP 09 165465 A (INT
FOAM SOLUTIONS INC) , 24 juin 1997**
• **PATENT ABSTRACTS OF JAPAN vol. 097, no.
002, 28 février 1997 & JP 08 253618 A (SONY
CORP), 1 octobre 1996**

**Description**

La présente invention concerne un procédé de transformation de polymères, de préférence de polymères expansés comme le polystyrène expansé. Plus particulièrement, la présente invention concerne un procédé de transformation de polymères d'un état solide expansé à un état amorphe non expansé sous forme d'un magma intermédiaire pâteux et flexible réutilisable. L'invention concerne le procédé de transformation proprement dit, la solution de transformation utilisée dans ce procédé, le dispositif permettant la mise en oeuvre du procédé de l'invention ainsi que le magma obtenu suite à la mise en oeuvre de ce procédé et des articles fabriqués à partir de ce magma.

L'utilisation de polymères expansés de type polystyrène, est très répandue. Cette utilisation, bien que très bénéfique au vu du faible coût et de la grande maniabilité du polystyrène expansé (P.S.E.), a eu pour résultat de générer des quantités considérables de déchets de P.S.E. difficilement recyclables.

Jusqu'à présent, deux solutions ont été proposées pour permettre à des industries aussi variées que l'industrie agro-alimentaire, l'industrie du bâtiment et, de façon plus générale, l'industrie de la manutention, de se débarrasser de leur déchets de P.S.E. Il s'agit soit de la destruction, soit du recyclage des P.S.E.

La destruction des P.S.E est effectuée par Incinération à des températures élevées. Outre les coûts élevés liés à la construction et à l'exploitation des installations d'incinération, la destruction des P.S.E. engendrent une dissémination de substances toxiques dans l'atmosphère.

En ce qui concerne le recyclage des P.S.E. les méthodes actuellement disponibles proposent généralement le broyage et la réintroduction en production d'emballages en polystyrène expansé usagés. Ce type de procédé est intéressant mais présente quelques inconvénients majeurs.

Entre autres, la propreté des emballages P.S.E. à recycler est une condition indispensable pour qu'ils puissent faire l'objet d'un recyclage approprié. De plus, le recyclage du P.S.E. implique son broyage et une granulation appropriée. Ces étapes rendent très compliqué le recyclage efficace du P.S.E.

La demande internationale WO-A-96/36662 décrit un procédé de traitement du polystyrène expansé consistant à traiter du P.S.E. avec un solvant organique du type pétrole, de sorte à former un produit intermédiaire. Ce produit est alors séparé du solvant organique.

Le brevet US-A-5223543 décrit un procédé pour réduire le volume de mousse de polystyrène au moyen de d-limonème.

Le Patent Abstract of Japan, vol 097, N° 002 & JP08253618 décrit un dispositif pour réduire la taille du polystyrène expansé en utilisant du d-limonème.

La demande de brevet JP09165465 décrit un procédé pour réduire sous forme d'un gel du polystyrène expansé, par mise en contact de celui-ci avec un ester d'acide dibasique.

La demande internationale W09509196 décrit un procédé pour compacter du polystyrène expansé au moyen d'un liquide comprenant un solvant dudit polystyrène et un composé non solvant du polystyrène, tel que de l'eau.

Un premier objet de la présente invention consiste alors en un procédé de transformation de polymères sans danger pour l'homme et l'environnement qui permet de revaloriser de façon efficace et rentable ce type de déchet.

Il s'agit d'un procédé simple, efficace et peu coûteux qui, contrairement aux procédés de recyclage actuels, ne pose pas nécessairement la condition préalable de grande propreté des déchets à recycler. Le procédé de l'invention permet d'obtenir une matière semifinie pâteuse, exploitable ensuite par tous les procédés classiques d'injection, d'extrusion ou de moulage dans l'industrie de la plasturgie. Ce matériau peut être aussi utilisé pour la fabrication de divers articles notamment des articles d'isolation ou de jointement. La consistance de la matière obtenue une fois solidifiée est proche d'une résine plastique.

La présente invention concerne donc un procédé de transformation d'un polymère, consistant en un P.S.E ou un copolymère styrénique expansé, caractérisé en ce que :

- on traite ledit polymère avec une solution de transformation comprenant:

  * une proportion majeure d'un solvant permettant de modifier l'état physique dudit polymère d'un état solide expansé à un état amorphe non expansé de sorte à obtenir un magma,
  * une proportion mineure d'un lubrifiant non gras consistant en la glycérine ou un polytétrafluororéthylène, en quantité suffisante pour conférer audit magma un état de surface non collant et, le cas échéant,
  * une proportion mineure d'un alcool en quantité suffisante pour lier ledit solvant et ledit lubrifiant dans ladite solution,

- on récupère ledit magma et, le cas échéant,
- on évapore en tout ou partie ledit solvant.

La présente invention sera maintenant décrite de façon plus détaillée et il conviendra, pour une meilleure compréhension de certaines réalisations préférentielles, de se référer aux figures ci-jointes dans lesquelles :

- la figure 1 représente un diagramme illustrant les étapes d'une réalisation du procédé de la présente invention;

- la figure 2a est une représentation schématique d'une réalisation d'un dispositif de transformation par immersion de la présente invention ;

- la figure 2b est une représentation schématique d'une réalisation d'un dispositif de transformation par pulvérisation de la présente invention ;

- la figure 3a représente une vue de côté des principaux éléments d'un dispositif de transformation selon l'invention ;

- la figure 3b représente une vue d'en haut du dispositif de la figure 2a;

- la figure 4a représente une vue d'en haut d'une réalisation préférentielle d'une enceinte de traitement du dispositif de transformation de la présente invention ;

- la figure 4b représente une coupe transversale d'une enceinte de traitement selon la ligne AA de la figure 4a ;

- la figure 5a est une représentation schématique d'un système d'alimentation du polymère non traité ;

- la figure 5b représente une coupe transversale d'une enceinte de traitement reliée à un système d'alimentation du polymère non traité.

- la figure 6 représente un diagramme illustrant les étapes d'une réalisation préférentielle du procédé de la présente invention.

- la figure 7 représente un dispositif préféré pour la mise en oeuvre du procédé de l'invention.

- la figure 8 représente un broyeur pouvant être mis en oeuvre dans le procédé de l'invention.

Le procédé selon l'invention permet l'obtention d'un magma de consistance uniforme et homogène. La consistance de la matière obtenue une fois ce magma solidifié, est proche d'une résine plastique.

Le magma obtenu suite au traitement du polymère par le procédé de l'invention est le résultat notamment d'une mutation dû polymère expansé en un polymère ayant une structure et consistance proche d'une résine classique pâteuse. Il s'agit d'un magma pâteux et flexible contenant de faibles quantités du solvant qui permettent d'en conserver la consistance pâteuse jusqu'au séchage.

Sans vouloir être limité à une théorie particulière, il semble que la transformation de polymères, notamment de polymères de type P.S.E. en un magma pâteux et flexible, soit le résultat d'effets de tension internes exercés sur le polymère par la solution de transformation, sans toutefois modifier les liaisons chimiques entre les monomères formant ces polymères et, vraisemblablement, sans qu'il y ait d'interactions majeures avec le polymère lui-même au niveau de sa structure. La solution de transformation permet, lors de sa réaction avec le polymère, d'obtenir un affaissement de la structure interne de ce dernier par le remplacement des molécules d'air emprisonnées dans sa structure par de faibles quantités de solvant. Le magma ainsi obtenu peut conserver sur une longue période de temps, généralement plus de deux ans, son caractère pâteux et flexible. A cette fin, il suffit que le magma soit maintenu dans une faible quantité de solvant, et, de préférence, à l'abri de l'air.

L'invention concerne avant tout le recyclage de polymères expansés de type P.S.E.

Contrairement aux procédés connus, il n'est pas absolument nécessaire que le polymère expansé à recycler soit exempt d'impuretés. On pourra, tel que décrit de façon plus détaillée plus loin, ajuster les paramètres opérationnels du procédé en fonction du type de polymère à transformer.

Il est à noter que bien que le polymère dont le recyclage est envisagé de façon prioritaire soit le P.S.E., d'autre types de polymères, expansés ou non, peuvent être transformés par la mise en oeuvre du procédé de l'invention. A cet égard, on peut citer les copolymères styréniques.

Bien qu'il soit préférable de broyer les éléments de polymère à recycler avant mise en contact avec la solution de transformation, le broyage n'est pas absolument nécessaire. En fait, le temps nécessaire à l'affaissement du polymère traité dépendra plutôt du diamètre des particules, généralement des billes, formant sa structure. Plus ce diamètre est élevé, plus le polymère contient d'air et plus sa réaction au traitement et donc son affaissement seront rapides.

Lorsqu'on met en oeuvre des déchets de P.S.E. de faible volume et particulièrement propres, le broyage du polymère à recycler n'est pas nécessaire.

En fonction de sa provenance, il peut être utile de substantiellement éliminer l'eau du polymère avant sa mise en contact avec la solution de transformation. On a en effet pu constater que la présence d'eau pouvait conduire à l'obtention d'un produit sec au lieu d'un magma pâteux et flexible. L'eau peut être éliminée par tout moyen conventionnel, par exemple au moyen d'un courant d'air à température ambiante ou d'air chaud.

La solution de transformation mise en oeuvre dans le procédé de l'invention comprend, en tant que solvant, un composé tel l'acétone. Un tel composé est particulièrement préféré dans le cadre de l'invention. Cependant d'autres produits tels certains alcools supérieurs, le benzène, le chloroforme ou encore le chlorure de méthylène, le tétrachloroéthylène, le tétrachlorure de carbone, le toluène ou le trichloroéthylène peuvent être envisagés dans la mesure où la structure de base du polymère à traiter est maintenue intacte.

Certains des solvants énumérés ci-dessus pourraient s'avérer trop agressifs pour le polymère à des concentrations élevées. Ils peuvent alors conduire à une altération de la structure de base du polymère. Des essais, tant au niveau de la concentration à utiliser qu'au niveau du type de solvant pouvant être utilisé peuvent être réalisés sans difficulté par l'homme du métier.

La proportion du solvant dans la solution de transformation utilisée pour la mise en oeuvre du procédé de l'invention sera, de façon générale, très importante par rapport aux autres composantes de la solution. L'homme du métier pourra choisir les proportions appropriées mais, de façon préférée, ces proportions devraient se situer entre 90 % et 99 % en volume de la solution de transformation. Dans le cas de l'acétone, qui s'est avérée jusqu'à présent être le'solvant le plus intéressant, les proportions de ce solvant dans la solution de transformation varient généralement entre 94 % et 98 % en volume de la solution de transformation, avec un pourcentage préféré se situant autour de 97 %.

Le lubrifiant est la deuxième composante importante de la solution de transformation utilisée dans la mise en oeuvre du procédé de l'invention. La proportion en lubrifiant doit être choisie de sorte à obtenir un magma pâteux présentant un état de surface non collant et conférer ainsi un pouvoir mouillant à ce magma. En l'absence d'un tel lubrifaant, on obtient dans la plupart des cas une résine présentant un état de surface craquelée une fois le solvant évaporé Ainsi, le lubrifiant selon l'invention permet de maîtriser la tension de surface au séchage, générateur de criques. En outre, le lubrifiant rend généralement le magma pâteux bien plus facilement manipulable.

Le type de lubrifiant pouvant être utilisé dans la mise en oeuvre du procédé de la présente invention peut être choisi sans difficulté par l'homme du métier, sachant cependant qu'il doit de préférence s'agir d'un lubrifiant non gras. La glycérine constitue un lubrifiant de choix mais d'autres lubrifiants non gras tels que les polytétrafluoroéthylènes, en particulier ceux commercialisés sous la marque Téflon®, sont également envisageables.

La proportion de lubrifiant dans la solution de transformation de l'invention est relativement faible par rapport à celle du solvant. I! s'agit généralement d'une proportion variant entre 1 % et 10 % en volume et de façon préférée, entre 1 % et 3 % en volume

Jusqu'à présent, la glycérine s'est avérée être le lubrifiant non gras le plus intéressant. Elle est de façon générale utilisée dans des proportions variant entre 1 % et 2 % en volume de la solution de transformation. Dans une réalisation préférentielle de l'invention, le pourcentage de glycérine se situe autour de 1,7 %.

L'incorporation d'un alcool en faible quantité dans la solution de transformation de l'invention est optionnelle bien que souhaitable. Le rôle de cet alcool est de lier les deux autres composantes de la solution afin de diminuer autant que possible les phénomènes de dissociation internes du magma obtenu.

Le choix de l'alcool approprié peut également être effectué par l'homme du métier. De façon préférée, l'alcool utilisé est un alcool éthylique 95°, plus préférentiellement de l'alcool éthylique bien que d'autres alcools linéaires ou ramifiés possédant entre 1 et 15 atomes de carbone puissent également être utilisés.

Les proportions de l'alcool dans la solution de transformation de la présente invention sont faibles. Elles varient de façon générale entre 1 % et 6 % en volume de la solution de transformation et, de façon préférée, entre 1 % et 2 % en volume. Dans une réalisation préférentielle de l'invention utilisant l'alcool éthylique 95°, le pourcentage préféré de cet alcool se situe autour de 1,3 % en volume.

il est important de noter ici que les concentrations d'alcool et de lubrifiant influent directement sur la fluidité finale du magma pâteux obtenu. A cet égard, la diminution des concentrations d'alcool et de lubrifiant au profit du solvant augment la fluidité du magma obtenu. Par exemple, une solution de transformation contenant 96 % d'acétone permet d'obtenir un magma intermédiaire plutôt solide alors qu'une solution de transformation contenant 96.5 % d'acétone permet d'obtenir un magma nettement plus fluide.

L'homme du métier pourra donc varier les concentrations des diverses composantes de la solution de traitement en fonction de la consistance finale recherchée pour le magma pâteux.

Selon un autre aspect de l'invention, celle-ci concerne également la solution de transformation décrite ci-dessus ainsi que son utilisation pour la transformation de polymères d'un état solide expansé à un état amorphe non expansé pour obtenir un magma pâteux et flexible.

La présente invention concerne également un dispositif pour la transformation, par l'intermédiaire d'une solution de transformation, de polymères, notamment de polymères expansés styréniques de type polystyrène expansé et copolymères styréniques, d'un état solide expansé à un état amorphe non expansé pour obtenir un magma pâteux et flexible. Ce dispositif est caractérisé en ce qu'il comprend une enceinte de traitement pouvant recevoir le polymère à transformer ainsi que des moyens d'introduction de la solution de transformation dans l'enceinte de traitement adaptés de façon à permettre un contact entre le polymère et la solution de transformation afin de conférer au polymère un état amorphe non expansé. Le dispositif comprend également, le cas échéant, des moyens d'évacuation du magma et des moyens de filtration permettant d'en éliminer les impuretés.

Plus particulièrement, le dispositif est constitué par une enceinte comprenant:

- un orifice d'entrée du polymère avant traitement;

- un orifice de sortie du polymère après traitement; et

- une série de buses disposées sur la périphérie intérieure de l'enceinte et permettant de pulvériser la solution de transformation sur le polymère passant à travers cette enceinte.

Les moyens d'évacuation de la pâte sont plus particulièrement constitués par un mécanisme de vis sans fin disposé en aval de l'enceinte de traitement. Quand aux moyens de filtration, ils sont généralement constitués par une trémie située en aval des moyens d'évacuation.

Le dispositif de la présente invention peut également comprendre des moyens de stockage et de broyage du polymère avant traitement par la solution de traitement.

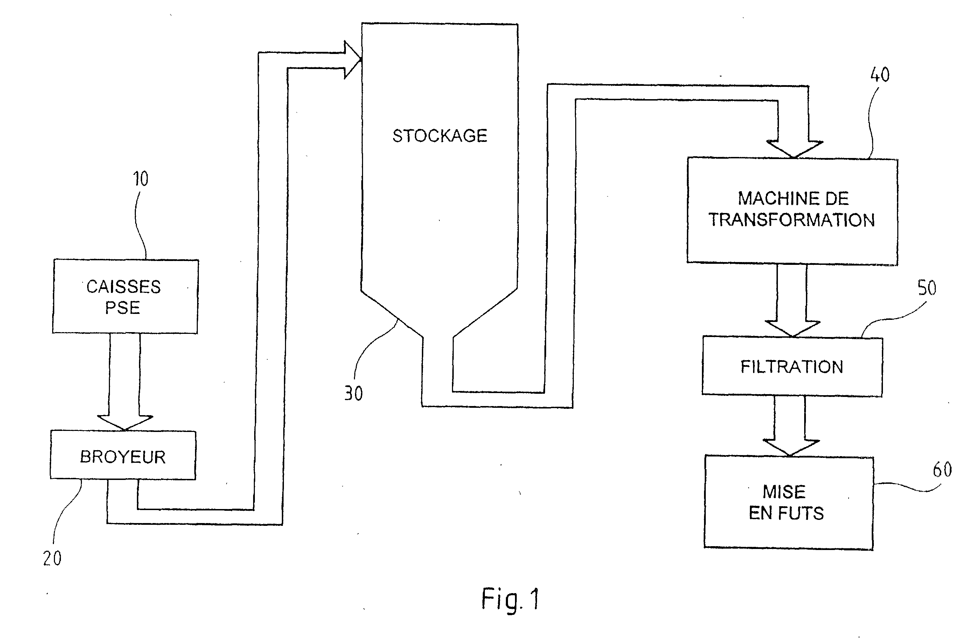

La figure 1 illustre les étapes pour la mise en oeuvre du procédé de la présente invention. Tel qu'illustré à titre d'exemple, des caisses de P.S.E. 10 sont d'abord soumises à une étape de broyage 20. Les granules ainsi obtenues sont stockées dans un silo approprié 30. Les granules sont ensuite transformées dans le dispositif de transformation 40 soit par immersion dans une solution de transformation, soit par pulvérisation de cette solution. Cette transformation est suivie d'une filtration des impuretés 50 et d'une mise en fûts 60 du magma amorphe ainsi obtenu.

1) Broyage du polymère

Tel que mentionné précédemment, l'étape de broyage du polymère préalablement à son utilisation dans la mise en oeuvre du procédé de l'invention n'est pas absolument nécessaire, surtout si le polymère à recycler est peu ou pas contaminé par des impuretés.

Cependant, lorsque le procédé de l'invention fait appel à la pulvérisation de la solution de transformation sur le polymère à recycler, il est préférable d'effectuer le broyage préalable de ce dernier.

Le diamètre des billes de polymère et notamment de P.S.E. broyé peut être ajusté sans difficulté par l'homme du métier de façon à ce que la pulvérisation de la solution de transformation permette le passage rapide d'un état solide expansé à un état amorphe non expansé du polymère à traiter.

2) Application de la solution de transformation

a. Immersion.

La mise en oeuvre du procédé de l'invention par immersion du polymère à traiter dans la solution de transformation est recommandée lorsque le polymère à recycler est propre ou peu contaminé par des impuretés. Il est préférable de ne pas immerger le polymère humide dans un bain de solution de transformation, car l'eau contenue dans le polymère diminuerait rapidement la capacité de transformation de la solution et le temps requis pour passer d'un état solide expansé à un état amorphe non expansé augmenterait rapidement suite aux traitements successifs.

Toutefois, l'immersion du polymère du type P. S.E. dans un bac contenant la solution de transformation peut s'avérer utile lorsqu'il s'agit de transformer de faibles quantités de polymère. Dans ce type d'opération, la quantité minimale de solution de transformation à utiliser est de 1 l par kilogramme de polymère à traiter. La quantité optimale de solution de transformants à utiliser varie entre 1,51 et 2 1 par kg de polymère à traiter.

b. Pulvérisation

La pulvérisation est préférée parce qu'elle permet de traiter plus rapidement des grandes quantités de polymère en utilisant des quantités minimales de solution de transformation.

Il s'agit de pulvériser la quantité la plus exacte possible de solution que l'on dose en fonction de la quantité de polymère à traiter, ce qui permet d'éviter l'accumulation d'eau ou d'impuretés dans le solvant.

De façon générale, la quantité optimale de solution de transformation à utiliser peut être évaluée selon les équations suivantes

$$M=Q+S$$

$$(Q \times 0{,}75) + Q = M$$

où

Q est la quantité de polymère à traiter (en kg) ;
S est la solution de transformation (en kg) ; et
M est la quantité de magma obtenue (en kg)

En d'autres termes, un kilo de P.S.E. traité à l'aide de 0,75 kg de solution de transformation permet d'obtenir 1,75 kg de magma pâteux.

3) Filtration du magma

Le magma obtenu est généralement filtré de façon à le débarrasser de la majeure partie de ses impuretés. Normalement, la consistance du magma obtenu est telle qu'il est possible de le faire passer sans trop de difficultés à travers une trémie. Le diamètre de cette trémie dépendra de la quantité et de la nature des impuretés présentes dans le polymère ainsi que de la consistance du magma obtenu. Le diamètre de la trémie et la pression appliquée en moyenne lors de la filtration peuvent être ajustés sans difficulté par l'homme du métier.

**4) Autres paramètres**

Toute la mise en oeuvre du procédé de la présente invention peut être effectuée à température ambiante. Lorsque l'acétone, la glycérine et l'alcool éthylique forment les composantes de la solution de transformation, il est possible de manipuler la pâte à mains nues sans danger. Il est également possible de colorer le magma dans la masse si nécessaire.

Une fois le magma obtenu à température ambiante, le délai de solidification des articles moulés ou extrudés à partir de ce magma est d'environ 48 h. Le magma peut toutefois être maintenu dans cet état amorphe sur une très longue période de temps en l'immergeant dans une faible quantité de la solution de transformation.

Il est bien sûr possible de réduire le délai de solidification des articles moulés ou extrudés à partir du magma à quelques secondes en cuisant ces articles. Des détails additionnels concernant la transformation du magma en articles finis seront fournis plus loin.

Dispositif de transformation

1) Transformation par immersion

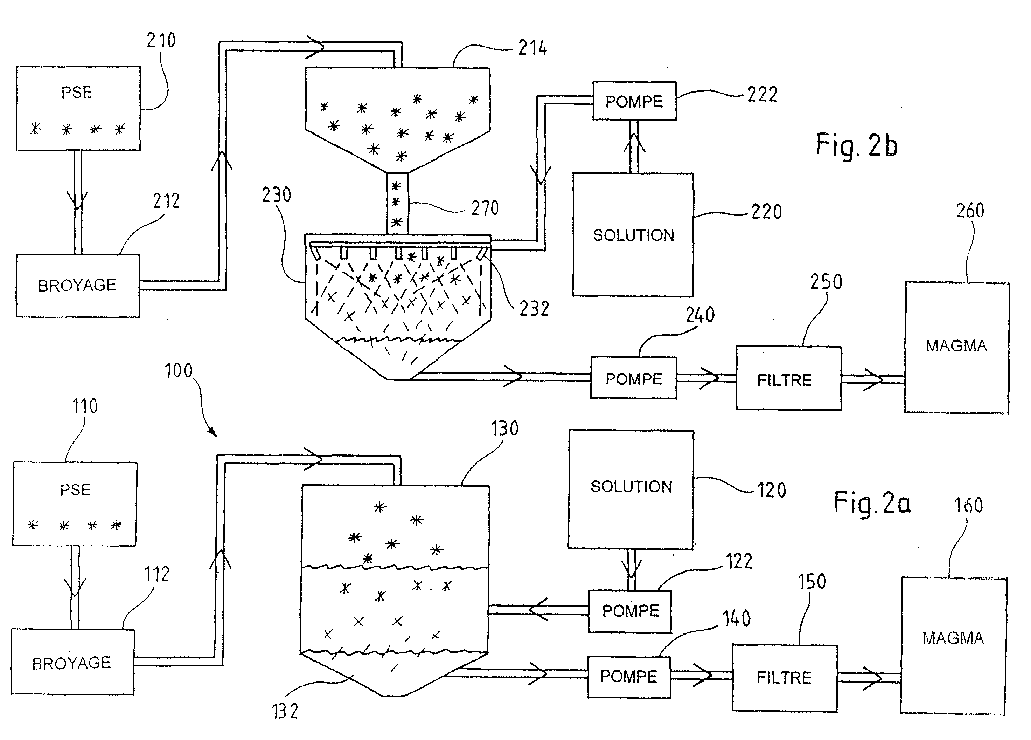

Le dispositif de transformation par immersion est illustré de façon schématique à la figure 2a. Ce dispositif, représenté de façon générale par la référence numérique 100, comprend, dans sa réalisation préférentielle, une première cuve de stockage 110 de P.S.E. reliée à un broyeur 112, lui-même relié à une enceinte de traitement 130. Une deuxième cuve de stockage 120 de la solution de transformation est reliée à une pompe 122 permettant d'alimenter l'enceinte de traitement 130. Cette enceinte de traitement 130 est également reliée à une pompe 140 reliée à un filtre 150 ainsi qu'à une enceinte de stockage 160 du magma.

Lors de l'utilisation du dispositif de transformation par immersion 100, une quantité prédéterminée de solution de transformation est pompée dans l'enceinte de traitement 130 par l'intermédiaire de la pompe 122. Le P.S.E. est ensuite déposé dans l'enceinte de traitement 130 de façon à être immergé dans la solution de transformation. Le magma 132 se dépose au fond de l'enceinte de traitement 130 et qui est ensuite pompé par la pompe 140 à travers le filtre 150 jusqu'à l'enceinte de récupération 160.

2) Transformation par pulvérisation

Une représentation schématique d'une première réalisation d'un dispositif de transformation par pulvérisation, illustrée de façon générale par référence numérique 200, est présentée à la figure 2b. Ce dispositif comprend une première cuve de stockage 210 du P.S.E. reliée à un broyeur 212, lui-même relié à une deuxième cuve de stockage 214 reliée directement à une enceinte de traitement 230. Le dispositif 200 comprend également une cuve de stockage 220 de la solution de transformation reliée à une pompe 222. La pompe 222 est reliée à une enceinte de traitement 230 et plus particulièrement à une série de pulvérisateurs 232 disposés sur la périphérie de l'enceinte de traitement 230. L'enceinte de traitement 230 est reliée à une pompe 240, elle-même reliée à un filtre 250, relié à un réservoir de stockage 260 du magma.

Lorsque le traitement d'un polymère de type P. S.E. est effectué par l'intermédiaire du dispositif de transformation par pulvérisation 200, la pompe 222 est actionnée afin de former, par l'intermédiaire des pulvérisateurs 232, une fine bruine de la solution de transformation à l'intérieur de l'enceinte de traitement 230. Le P.S.E. 270 est ensuite déposé par gravité dans l'enceinte de traitement 230. L'homme du métier pourra facilement ajuster la vitesse à laquelle le P.S.E. sera déposé dans l'enceinte de traitement 230 en fonction de la hauteur de cette enceinte et du taux de pulvérisation de la solution de transformation.

Une fois le magma 232 déposé au fond de l'enceinte de traitement 230, la pompe 240 permet de le faire passer à travers le filtre 250, puis de le stocker dans les fûts 260 dont la fermeture peut être hermétique.

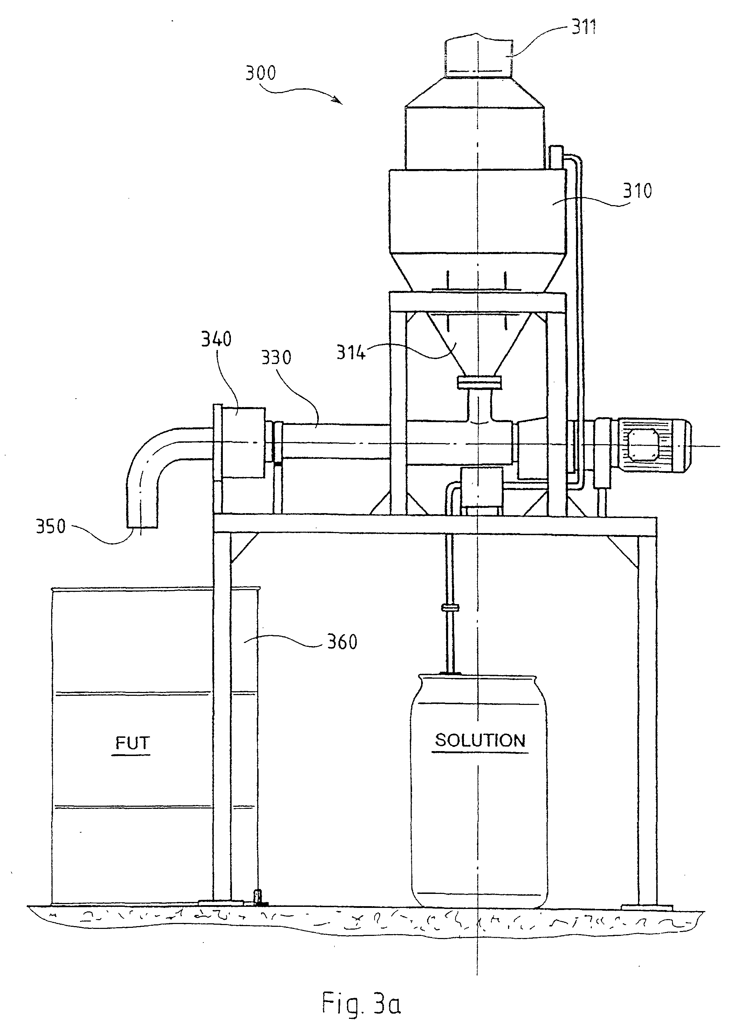

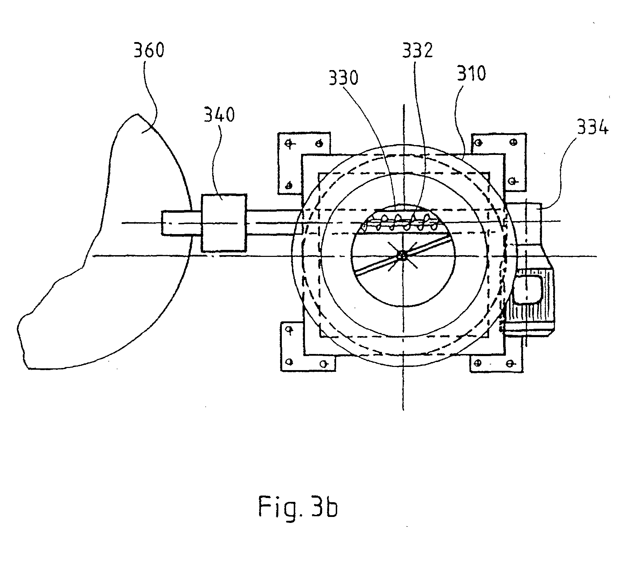

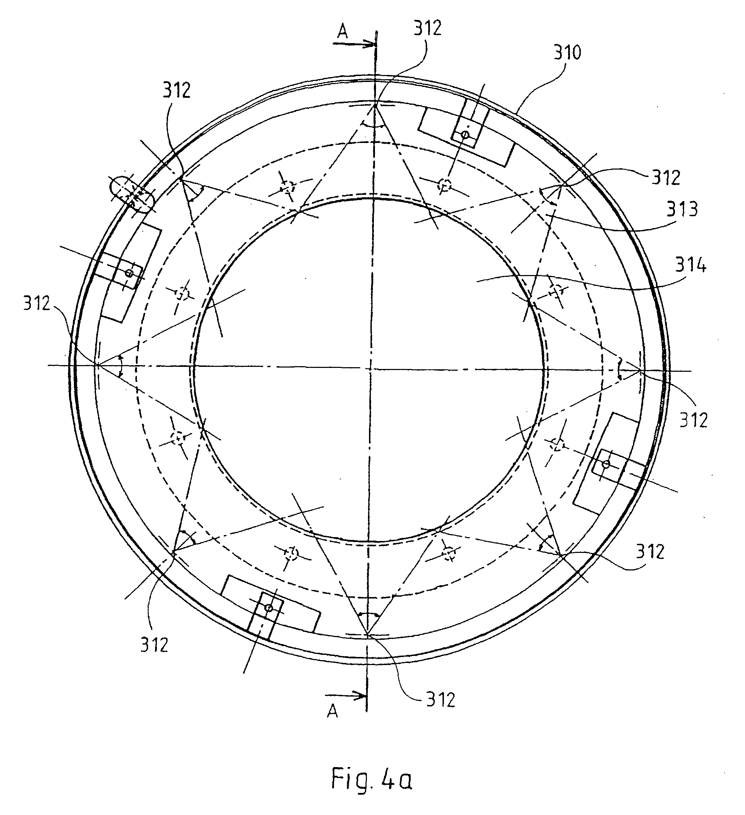

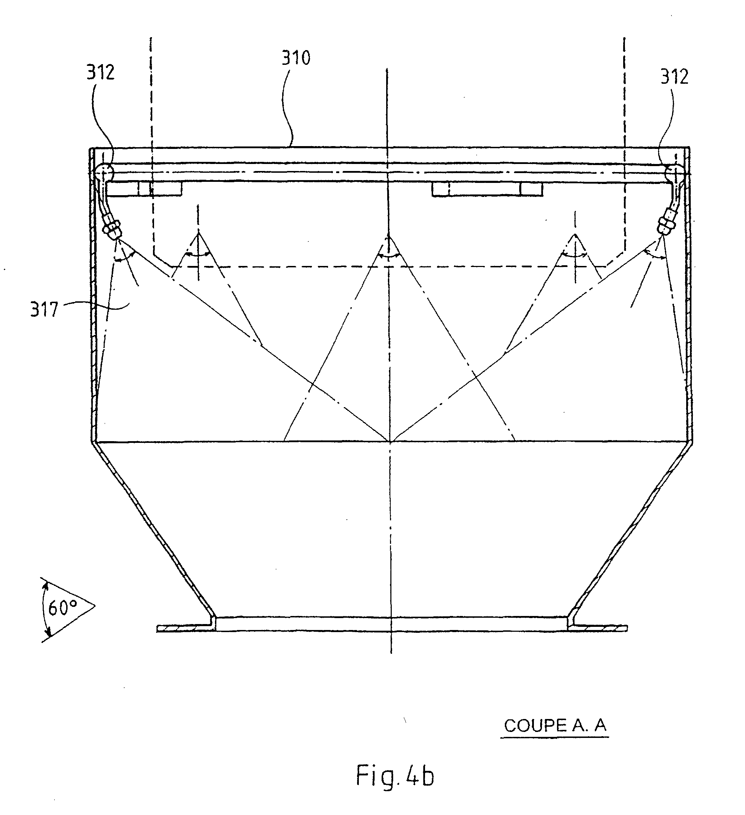

Une autre réalisation du dispositif de transformation par pulvérisation est illustrée aux figures 3a, 3b, 4a et 4b. Se référant maintenant à la figure 3a, le dispositif de transformation par pulvérisation, illustré de façon générale par la référence numérique 300, comprend une enceinte de traitement 310 dont la partie supérieure comporte une ouverture 311 permettant l'introduction du P.S.E. à traiter. L'enceinte de traitement 310 est reliée dans sa partie inférieure 314 à des moyens d'évacuation 330 du magma. Ces moyens d'évacuation 330 sont reliés à un filtre 340, lui-même relié à un orifice de sortie 350 du magma. Un fût 360 permet de recevoir le magma après traitement.

Se référant maintenant à la figure 3b, les moyens d'évacuation 330 du magma sont de façon préférée constitués par une vis sans fin 332 actionnée par un moteur 334. Cette vis sans fin 332 permet d'évacuer le magma à travers le filtre 340, vers le fût 360.

De façon préférée et tel qu'illustré à la figure 3b, l'enceinte de traitement 310 est de forme circulaire. L'enceinte de traitement 310 ainsi que les moyens d'évacuation 330 sont de façon préférée fabriqués à partir de pièces lisses permettant d'éviter autant que possible le collage du magma soit sur la paroi de l'enceinte de traitement 310 soit sur la vis sans fin 332 des moyens d'évacuation 330. On utilisera de façon préférée des alliages d'acier inoxydable, en particulier des alliages de type Inox 304 L.

L'enceinte de traitement 310 est illustrée de façon plus détaillée à la figure 4a qui représente une vue de haut de cette enceinte. L'enceinte 310 comprend, disposée en périphérie de sa paroi intérieure, une série de buses de pulvérisation 312. Ces buses de pulvérisation 312 ont un angle de pulvérisation 313 de portée suffisamment large pour effectuer une pulvérisation de la solution de transformation sur toute la surface de l'enceinte 310 de façon à obtenir un atmosphère fortement chargée de la solution de transformation et à permettre une vaporisation homogène sur le P.S.E. tombant dans l'enceinte de traitement 310.

Tel qu'illustré à la figure 4b, l'angle de pulvérisation 317 des buses de pulvérisation 312 est prévu de façon à ce que la pulvérisation s'effectue de façon homogène sur toute la surface intérieure de l'enceinte 310. De façon préférée, les buses de pulvérisation 312 sont orientées vers la partie inférieure de l'enceinte 310. Ceci a pour but d'éviter la formation de magma sur les buses 312. De façon générale, les angles de pulvérisation des buses de pulvérisation 312 sont d'environ 60° et peuvent être ajustés par l'homme du métier en fonction du volume de l'enceinte de traitement 310.

Se référant de nouveau à la figure 3a, lors de la mise en oeuvre du procédé de l'invention utilisant le dispositif de transformation par pulvérisation 300, le P.S.E. à transformer est déposé dans l'enceinte de traitement 310 par l'ouverture 311 après que les buses 312 illustrées aux figures 4a et 4b ont été activées de façon à pulvériser la solution de traitement sur le P.S.E.

Le magma déposé au fond de l'enceinte de traitement 310 est évacué par la vis sans fin 332 illustrée à la figure 3b. De faibles quantités de P.S.E. peuvent encore réagir avec la solution de transformation pendant cette étape de traitement. Le magma obtenu est ensuite passé à travers le filtre 340, et déposé dans le fût de stockage 360 où des quantités résiduelles de P.S.E. non traité peuvent encore réagir.

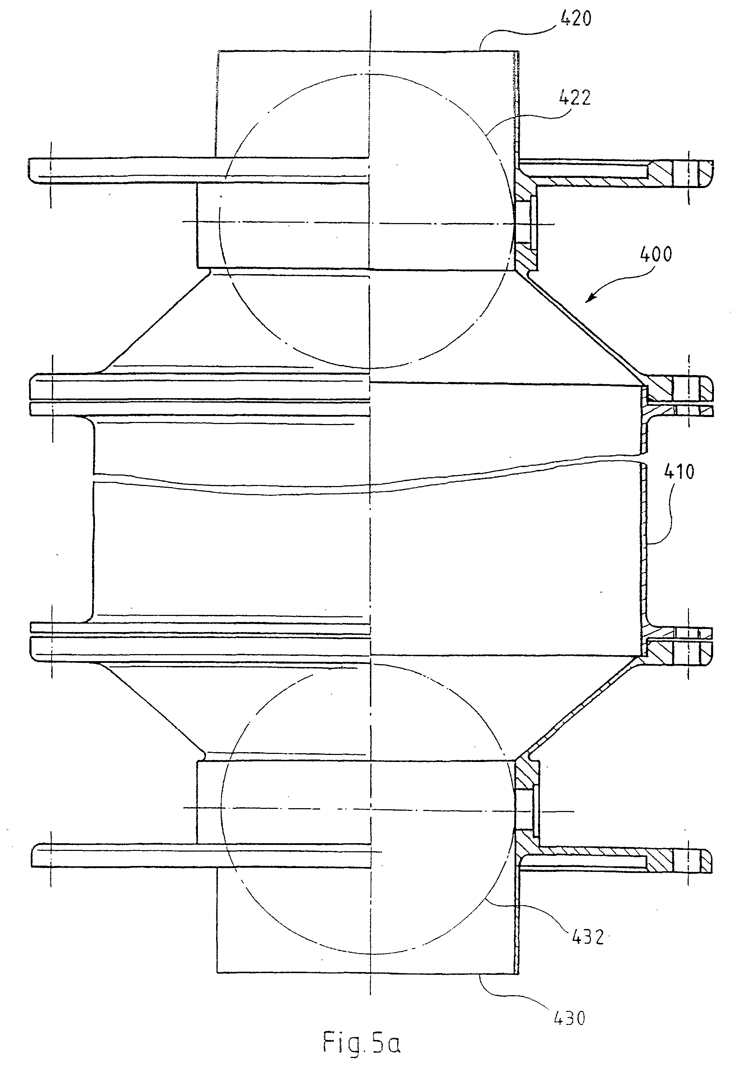

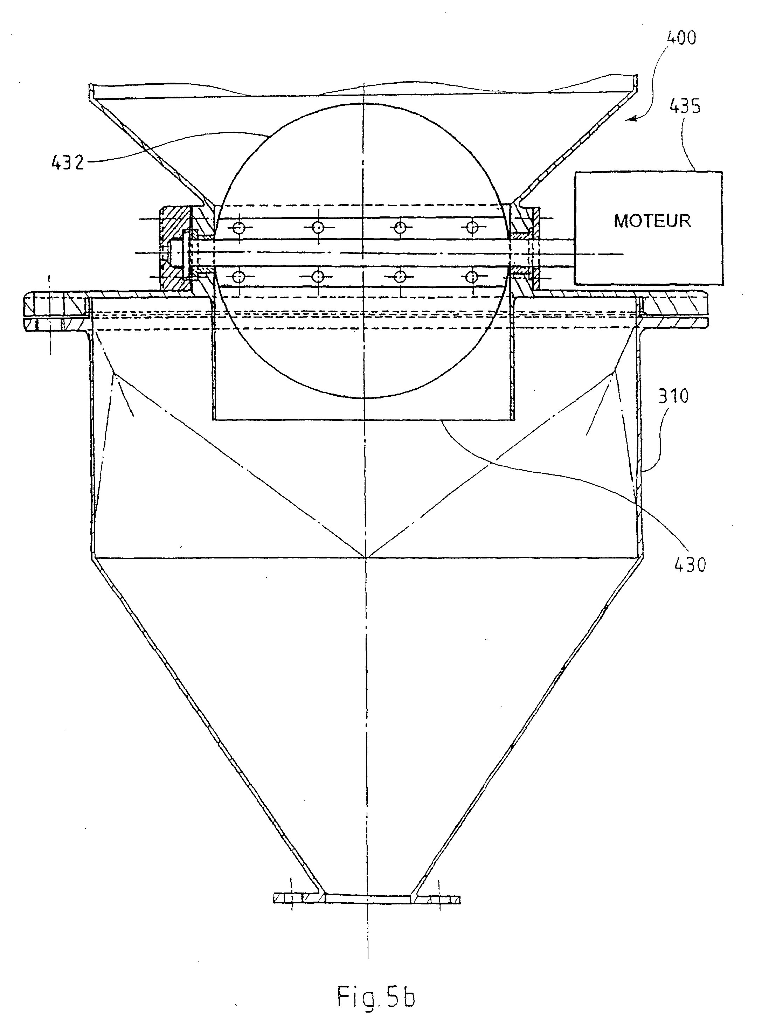

Se référant de nouveau à la figure 3a, l'ouverture 311 qui permet l'introduction du P.S.E. à traiter dans l'enceinte de traitement 310 peut également comprendre un système mécanique d'alimentation pour calibrer le volume du polymère à traiter. Ce système d'alimentation est illustré aux figures 5a et 5b.

La figure 5a illustre les principaux éléments du système d'alimentation, qui est représenté de façon générale par la référence numérique 400. Le système d'alimentation 400 est constitué par une enceinte de réception du polymère 410 comportant un orifice d'introduction 420 du polymère à traiter ainsi qu'un orifice de sortie 430 du polymère vers l'enceinte de traitement dans laquelle le procédé de l'invention sera mis en oeuvre.

L'orifice d'introduction 420 comporte un premier moyen de fermeture illustré sous forme d'un premier clapet d'alimentation 422 actionné par un moteur (non illustré). L'orifice de sortie 430 comporte un deuxième moyen de fermeture illustré sous forme d'un deuxième clapet d'alimentation 432, également actionné par un moteur (non illustré).

La figure 5b illustre la position de la partie inférieure du système d'alimentation 400 sur l'enceinte de traitement 310. Le deuxième clapet d'alimentation 432 est relié à un moteur 434 permettant de déplacer ce clapet d'une position verticale ouverte, telle qu'illustrée à la figure 5b, à une position horizontale fermée, ce qui aurait pour conséquence de fermer l'orifice de sortie 430.

Se référant de nouveau à la figure 5a, lorsqu'il est souhaitable de calibrer le volume de polymère à introduire dans l'enceinte de traitement dans laquelle le procédé de l'invention sera mis en oeuvre, le premier clapet d'alimentation 422 est placé en position ouverte et le deuxième clapet d'alimentation 432 en position fermée. Une quantité de polymère peut ensuite être introduite dans l'enceinte de réception 410 jusqu'à ce que cette dernière soit remplie partiellement ou totalement de la quantité de polymère désiré. Le deuxième clapet d'alimentation 432 est ensuite placé en position ouverte, ce qui aura pour effet de faire tomber le polymère à traiter dans l'enceinte de traitement appropriée.

Il est important de noter que, dans le système d'alimentation illustré aux figures 5a et 5b, la présence du premier clapet d'alimentation 422 n'est pas absolument nécessaire. En effet, le polymère à traiter peut être introduit dans l'enceinte de réception 410 avec le deuxième clapet d'alimentation 432 en position fermée sans qu'il soit absolument nécessaire, une fois l'enceinte de réception 410 remplie de la façon désirée, de refermer le premier clapet d'alimentation 422.

Toutefois, le premier clapet d'alimentation 422 peut s'avérer très utile dans les situations où une enceinte de stockage du polymère à traiter serait située immédiatement au-dessus de l'enceinte de réception 410. Ce premier clapet d'alimentation 422 serait alors essentiel pour pourvoir doser la quantité appropriée de polymère à introduire dans l'enceinte de réception 410.

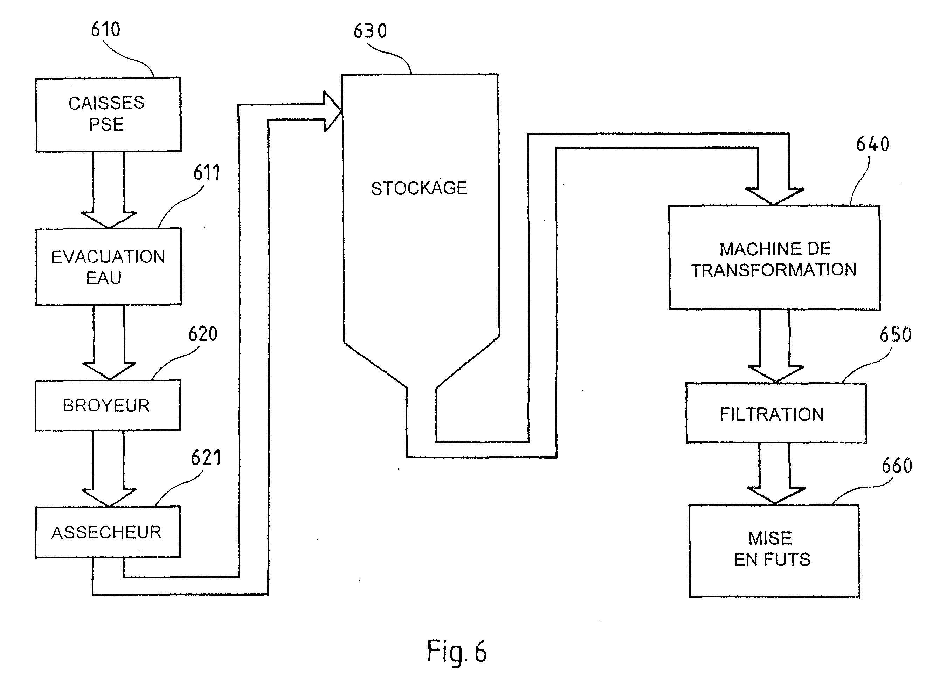

La figure 6 représente les étapes essentielles pouvant être mises en oeuvre pour une réalisation préférentielle du procédé de la présente invention. Tel qu'illustré à titre d'exemple, les caisses de P.S.E. 610 sont soumises à une étape d'évacuation d'eau 611 puis soumises à une étape de broyage 620. On obtient ainsi des granules qui sont séchées 621 avant d'être convoyées vers un silo approprié 630. Les granules sont ensuite transformées dans le dispositif de transformation 640 soit par immersion dans une solution de transformation, soit par pulvérisation de cette solution. Cette transformation est suivie d'une filtration des impuretés 650 et d'une mise en fût du magma amorphe ainsi obtenu 660.

L'évacuation de l'eau consiste, si besoin, à chasser l'eau présente sur les caisses de P.S.E. à traiter. Cette évacuation peut être réalisée dans un carter dans lequel sont introduits les caisses de P.S.E. Le carter peut être muni de réglettes par exemple en téflon, permettant de faciliter le passage des caisses de P.S.E. Sur chaque face de ce carter peuvent être répartis de deux à huit buses alimentées par une turbine d'air. L'air peut être à la température ambiante et sous pression. L'étape de séchage suivant l'étape de broyage a pour but d'assécher le P.S.E. pendant son transport du broyeur au silo. A cet effet, de l'air chaud est puisé à la sortie de l'étage de broyage, permettant ainsi de sécher complètement les fragments de P.S.E. pendant leur transport. Les autres étapes de traitement du P.S.E. sont similaires à celles décrites plus haut.

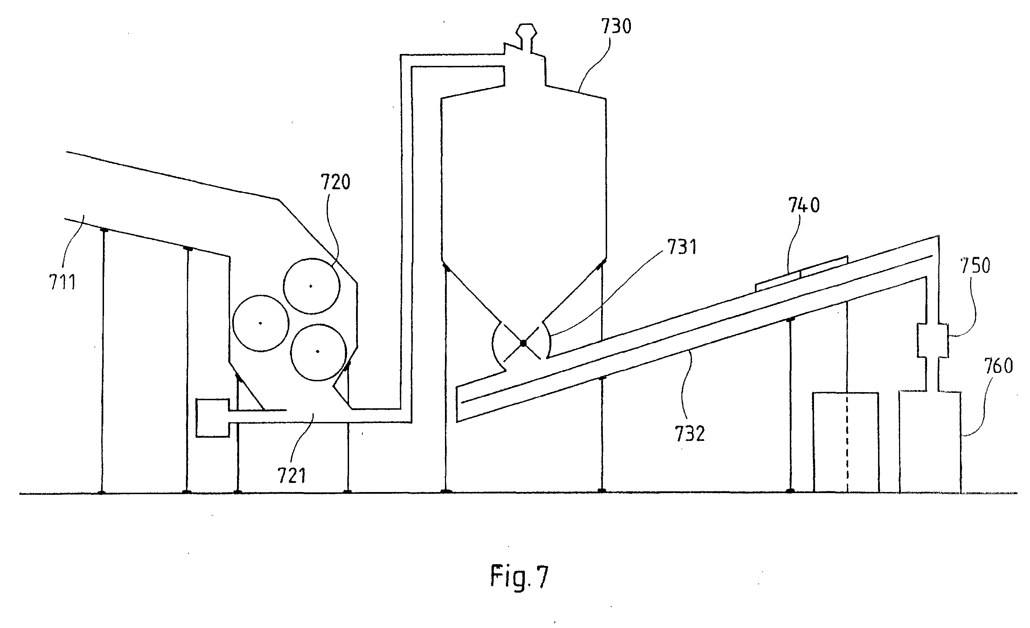

La figure 7 illustre un dispositif préféré dans le cadre de la présente invention. Ce dispositif comporte un système d'évacuation d'eau 711 débouchant à l'entrée d'un broyeur 720. La sortie du broyeur 720 communique avec l'entrée d'un sécheur 721 relié à un silo de stockage 730. La base du silo 730 est pourvue d'une écluse de régulation de matière 731 reliée à un convoyeur 732. Ce dernier est pourvu sur une partie de sa longueur d'un système de pulvérisation 740. La sortie du convoyeur 732 est reliée à un système de filtration 750 dont la sortie communique avec des fûts de stockage 760.

Ce dispositif a pour premier avantage de permettre l'élimination substantielle de toute trace d'eau du polymère avant son traitement par la solution de transformation.

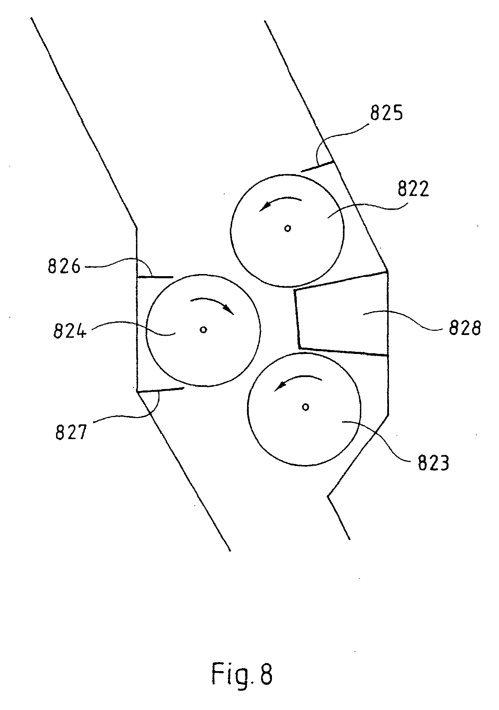

La figure 8 illustre un dispositif de broyage 720 pouvant notamment être mis en oeuvre dans le dispositif représenté à la figure 7. Ce dispositif comprend au moins trois cylindres 822, 823, 824 disposés en chicane ainsi que des barres anti-retour 825, 826, 827, 828. Selon un aspect particulièrement avantageux, chacun des cylindres 822, 823 et 824 constitutifs du broyeur a une vitesse différente. Ainsi, la vitesse du cylindre 824 peut être choisie de sorte à être égale à environ 2 fois celle du cylindre 822, alors que la vitesse du cylindre 823 est environ égale à trois fois celle du cylindre 822.

Le dispositif représenté à la figure 7, disposant d'un broyeur selon la figure 8, permet de traiter plus de quatre cents caisses de P.S.E. par heure, ces caisses présentant une longueur de 800 millimètres, une largeur de 400 millimètres et une hauteur de 300 millimètres ou plus de 100 m3 de P.S.E. par heure.

L'environnement dans lequel l'évaporation des faibles quantités de solvant contenues dans le magma sera effectuée influera de manière importante sur la structure finale du produit.

De façon générale, l'évaporation du solvant peut être effectuée de trois façons:

- soit par air pulsé chaud à pression ambiante ;

- soit par moulage par injection sous pression ; ou

- soit par cuisson à la chaleur avec ou sans pression.

a. Séchage par air chaud pulsé.

L'utilisation d'air chaud pulsé au moment du séchage du magma de l'invention permet d'obtenir un produit légèrement alvéolé qui peut entre autres être facilement utilisé à titre d'isolant sur des surfaces lisses.

Par exemple, le magma peut être appliqué non séché sur des surfaces murales. Cette application est suivie d'un séchage par air chaud pulsé qui produit une certaine expansion du polymère qui constituera alors un isolant efficace facile à utiliser.

b. Moulage par injection ou séchage naturel

Ces deux types de séchage permettent d'obtenir des blocs de résine solides dans lesquels le P.S.E. est peu ou pas expansé. Le séchage par injection permet une solidification plus rapide que le séchage naturel.

c. Cuisson sans pression

La cuisson sans pression du magma de l'invention peut également amener une expansion du polymère.

Les applications envisageables pour le magma obtenu suite à la mise en oeuvre du procédé de la présente invention sont nombreuses et variées.

Parmi les exemples d'application de la pâte de la présente invention, mentionnons entre autres diverses applications industrielles ou domestiques permettant d'obtenir des articles finis sous toutes formes tels que de la tuyauterie, des cuvettes, des boîtes diverses ainsi que des carters de protection.

Selon un autre aspect de l'invention, celle-ci concerne des articles composites pouvant être préparés à partir du magma pâteux décrit plus haut et d'au moins un tiers composé. Ces articles peuvent consister en des produits pâteux ou liquides tels des colles, des vernis, des enduits, des joints d'étanchéité, des peintures ou des laques ainsi que des produits solides consistant notamment en des panneaux de particules agglomérées.

Une colle selon l'invention peut comprendre un mélange de magma pâteux avec un solvant organique susceptible de casser une partie au moins des liaisons chimiques entre les monomères constitutifs du polymère. Un tel solvant organique peut notamment consister en le trichloréthylène. Une colle selon l'invention contient en général au moins 85%, de préférence au moins 90% en poids de magma pâteux. Une telle colle présente une force de cohésion supérieure aux colles à base de néoprène actuellement sur le marché.

Une colle selon l'invention peut en outre comprendre de 1 à 7% d'un composé tel le xylène. Un tel composé permet d'obtenir une souplesse relative du film de colle et un point de rupture moins violent. Cette colle peut être obtenue par simple mélange de ces composants.

Il est également possible de préparer un vernis ou des laques à base du magma pâteux de l'invention. Ces vernis comprennent outre le magma de base, un solvant organique du type trichloréthylène ainsi que de l'essence de térébenthine.

Les colles et vernis décrits plus haut peuvent en outre contenir des agents anti U.V. tels que l'acide phényl-2-benzymidazolsulfénique.

D'autres articles composites conformes à la présente invention consistent en des joints d'étanchéité comprenant un magma pâteux tel que décrit plus haut ainsi que des particules de plâtres. De tels joints d'étanchéité, contenus dans une enceinte scellée, peuvent être conservés pendant une longue période de temps, généralement plus de deux ans. Ces joints d'étanchéité peuvent être préparés par simple mélange de leurs composants.

L'invention concerne également des articles composites solides préparés à partir d'un magma pâteux décrit plus haut. Ces articles peuvent être préparés par simple mélange mécanique par exemple par malaxage et pétrissage, du magma pâteux selon l'invention avec des particules solides organiques telles que des particules de bois, de fibres naturelles, de fibres artificielles, ou des particules solides non organiques, comme des particules de métal, de verre, de poudre d'argile, de poudre de pierre ou de poudre d'ardoise. Le mélange ainsi obtenu peut être alors séché et durci.

Avant séchage, on peut ajouter au mélange des agents anti U.V. tel l'acide phényl-2-benzymidazolsulfénique. On peut également disposer le mélange avant séchage dans un moule adéquat pour obtenir après séchage et durcissement un article de forme désirée. De cette façon, on peut préparer des panneaux de matières agglomérées d'usage divers. Ainsi, lorsque les particules solides consistent en des particules de brique, le panneau pourra par exemple être utilisé pour des ornements de façade. Par ailleurs, lorsque les particules sont des particules de bois, les panneaux peuvent intervenir dans la constitution d'éléments de palettes, de parquets ou de meubles.

Selon un aspect avantageux de l'invention, les panneaux de particules agglomérées définis ci-dessus peuvent être assemblés entre eux au moyen de la colle décrite plus haut. Enfin ces panneaux peuvent être vernis au moyen d'un verni tel que celui mentionné ci-dessus.

Les articles solides selon l'invention présentent de bonnes propriétés d'étanchéité, d'isolation thermique et phonique.

**Revendications**

1. Procédé de transformation d'un polymère consistant en du polystyrène expansé (P.S.E) ou un copolymère styrénique expansé, **caractérisé en ce que**:

   - on traite ledit polymère avec une solution de transformation comprenant:

     * une proportion majeure d'un solvant permettant de modifier l'état physique dudit polymère d'un état solide expansé à un état amorphe non expansé de sorte à obtenir un magma,

     * une proportion mineure d'un lubrifiant non gras consistant en la glycérine ou un polytétrafluoroéthylène, en quantité suffisante pour conférer audit magma un état de surface non collant et, le cas échéant,

     * une proportion mineure d'un alcool en quantité suffisante pour lier ledit solvant et ledit lubrifiant dans ladite solution

   - on récupère ledit magma et, le cas échéant,
   - on évapore en tout ou partie ledit solvant.

2. Procédé selon la revendication 1, **caractérisé en ce qu'**on broie le polymère avant de le traiter par ladite solution de transformation.

3. Procédé selon la revendication 1 ou 2, **caractérisé en ce qu'**on immerge le polymère dans la solution de transformation.

4. Procédé selon la revendication 1 ou 2, **caractérisé en ce qu'**on pulvérise la solution de transformation sur le polymère.

5. Procédé selon l'une quelconque des revendications 1 à 4, **caractérisé en ce qu'**on filtre le magma pour en extraire les impuretés.

6. Procédé selon l'une quelconque des revendications 1 à 5, **caractérisé en ce que** le solvant de ladite solution de transformation est choisi parmi le benzène, le chloroforme, le chlorure de méthylène, le tétrachloréthylène, le tétrachlorure de carbone, le toluène ou le trichloréthylène.

7. Procédé selon l'une quelconque des revendications 1 à 6, **caractérisé en ce que** le solvant de ladite solution de transformation est l'acétone.

8. Procédé selon la revendication 7, **caractérisé en ce que** la solution de transformation comprend entre 90% et 99%, de préférence entre 94 % et 98 % en volume de solvant.

9. Procédé selon l'une quelconque des revendications 1 à 8, **caractérisé en ce que** le lubrifiant non gras de la solution de transformation est la glycérine.

10. Procédé selon l'une quelconque des revendications 1 à 9, **caractérisé en ce que** ladite solution de transformation comprend entre 1 % et 10 %, de préférence entre 1 % et 3 % en volume de glycérine.

11. Procédé selon l'une quelconque des revendications 1 à 10, **caractérisé en ce que** l'alcool de ladite solution de transformation est l'alcool éthylique 95°

**12.** Procédé selon la revendication 11, **caractérisé en ce que** ladite solution de transformation comprend entre 1 % et 6 %, de préférence entre 1 % et 2 %, en volume d'alcool éthylique 95°.

**13.** Procédé selon l'une quelconque des revendications 1 à 12, **caractérisé en ce que** le polymère est le polystyrène expansé (P.S.E.).

**14.** Magma d'un polymère, consistant en du polystyrène expansé (P.S.E) ou un copolymère styrénique expansé, **caractérisé en ce qu'**il est susceptible d'être obtenu selon le procédé de l'une quelconque des revendications 1 à 13.

**15.** Composition comprenant :

- une proportion majeure d'un solvant permettant de modifier l'état physique d'un polymère expansé, consistant en du polystyrène expansé ou un copolymère styrénique expansé, d'un état solide expansé à un état (P.S.E) amorphe non expansé pour obtenir un magma,

- une proportion mineure d'un lubrifiant non gras consistant en la glycérine ou un polytétrafluoroéthylène en une quantité suffisante pour conférer audit magma un état de surface non collant; et, le cas échéant,

- une proportion mineure d'un alcool en quantité suffisante pour lier ledit solvant et ledit lubrifiant dans ladite composition.

**16.** Composition selon la revendication 15, **caractérisée en ce qu'**elle comprend de 94 % à 98 % d'acétone, de 1 % à 10 % de glycérine et de 1 % à 6 % en volume d'alcool éthylique à 95°.

**17.** Utilisation d'une composition selon l'une des revendications 15 et 16 pour la transformation d'un polymère expansé, consistant en du polystyrène ou un copolymère styrénique, d'un état solide expansé à un état amorphe non expansé, pour obtenir un magma, présentant un état de surface non collant.

**18.** Article composite solide, pâteux ou liquide comprenant un magma selon la revendication 14.

**19.** Article solide selon la revendication 18, **caractérisé en ce qu'**il comprend en autre des particules solides organiques telles que des particules de bois, de fibres naturelles, de fibres artificielles, ou des particules solides non organiques, comme des particules de métal, de verre; de poudre d'argile, de poudre de pierre ou de poudre d'ardoise.

**20.** Article liquide ou pâteux selon la revendication 18, **caractérisé en ce qu'**il consiste en une colle, un vernis, une laque, un joint d'étanchéité ou une peinture.

**Claims**

**1.** A process for the conversion of a polymer consisting of expanded polystyrene (EPS) or an expanded styrene copolymer, **characterised in that**:

- said polymer is treated with a conversion solution comprising:

  * a major proportion of a solvent making it possible to modify the physical state of said polymer from an expanded solid state to a non-expanded amorphous state such as to obtain a magma,
  * a minor proportion of a non-greasy lubricant consisting of glycerine or a polytetrafluoroethylene in a sufficient amount to give said magma a non-sticky surface state and, if necessary,
  * a minor proportion of an alcohol in a sufficient amount to bind said solvent and said lubricant in said solution,

- said magma is recovered and, if necessary,
- all or part of said solvent is evaporated.

**2.** A process according to claim 1, **characterised in that** the polymer is ground before being treated with said conversion solution.

**3.** A process according to claim 1 or 2, **characterised in that** the polymer is immersed in the conversion solution.

**4.** A process according to claim 1 or 2, **characterised in that** the conversion solution is sprayed onto the polymer.

**5.** A process according to any one of claims 1 to 4, **characterised in that** the magma is filtered in order to extract the impurities therefrom.

**6.** A process according to any one of claims 1 to 5, **characterised in that** the solvent of said conversion solution is chosen from benzene, chloroform, methylene chloride, tetrachloroethylene, carbon tetrachloride, toluene or trichloroethylene.

**7.** A process according to any one of claims 1 to 6, **characterised in that** the solvent of said conversion solution is acetone.

**8.** A process according to claim 7, **characterised in**

**that** the conversion solution comprises from 90% to 99%, preferably from 94% to 98% by volume of solvent.

9. A process according to any one of claims 1 to 8, **characterised in that** the non-fatty lubricant of the conversion solution is glycerine.

10. A process according to any one of claims 1 to 9, **characterised in that** said conversion solution comprises from 1 % to 10%, preferably from 1% to 3% by volume of glycerine.

11. A process according to any one of claims 1 to 10, **characterised in that** the alcohol of said conversion solution is ethyl alcohol 95°.

12. A process according to claim 11, **characterised in that** said conversion solution comprises between 1% and 6%, preferably from 1% and 2% by volume of ethyl alcohol 95°.

13. A process according to any one of claims 1 to 12, **characterised in that** the polymer is expanded polystyrene (EPS).

14. A magma of a polymer, consisting of expanded polystyrene (EPS) or an expanded styrene copolymer, **characterised in that** it may be obtained according to the process of any one of claims 1 to 13.

15. A composition comprising:

    - a major proportion of a solvent making it possible to modify the physical state of an expanded polymer, consisting of expanded polystyrene (EPS) or an expanded styrene copolymer, from an expanded solid state to a non-expanded amorphous state in order to obtain a magma,
    - a minor proportion of a non-greasy lubricant consisting of glycerine or a polytetrafluoroethylene in a sufficient amount to give said magma a non-sticky surface state and, if necessary,
    - a minor proportion of an alcohol in a sufficient amount to bind said solvent and said lubricant in said composition.

16. A composition according to claim 15, **characterised in that** it comprises from 94% to 98% of acetone, from 1% to 10% of glycerol and from 1% to 6% by volume of ethyl alcohol 95°.

17. The use of a composition according to one of claims 15 and 16 for the conversion of an expanded polymer, consisting of polystyrene (EPS) or a styrene copolymer, from an expanded solid state to a non-expanded amorphous state in order to obtain a magma having a non-sticky surface state.

18. A solid, pasty or liquid composite article comprising a magma according to claim 14.

19. A solid article according to claim 18, **characterised in that** it also comprises organic solid particles such as particles of wood, natural fibres, artificial fibres, or non-organic solid particles such as particles of metal, glass, clay powder, stone powder or slate powder.

20. A liquid or pasty article according to claim 18, **characterised in that** it consists of an adhesive, a varnish, a lacquer, a sealant or a paint.

**Patentansprüche**

1. Verfahren zur Umwandlung eines aus aufgeschäumtes Polystyrol (EPS) oder einem aufgeschäumten Styrolcopolymer bestehenden Polymers, **dadurch gekennzeichnet, dass** man

    - das Polymer mit einer Umwandlungslösung behandelt, welche:

      * als Hauptbestandteil ein Lösungsmittel, welches erlaubt, den physikalischen Zustand des Polymers aus einem aufgeschäumten Zustand in einen amorphen, nicht aufgeschäumten Zustand derart umzuwandeln, dass ein Brei erhalten wird,
      * einen geringen Anteil eines fettfreien Gleitmittels bestehend aus Glycerin oder Polytetrafluorethylen in einer Menge, welche ausreicht, dem Brei einen nichtklebenden Oberflächenzustand zu verleihen, und, gegebenenfalls,
      * einen geringen Anteil eines Alkohols in einer Menge beinhaltet, welche ausreicht, das Lösungsmittel und das Gleitmittel in der Lösung zu binden,

    - den Brei zurückgewinnt und, gegebenenfalls,
    - das Lösungsmittel vollständig oder teilweise verdampft.

2. Verfahren nach Anspruch 1, **dadurch gekennzeichnet, dass** man das Polymer vor der Behandlung mit der Umwandlungslösung zerkleinert.

3. Verfahren nach Anspruch 1 oder 2, **dadurch gekennzeichnet, dass** man das Polymer in die Umwandlungslösung eintaucht.

4. Verfahren nach Anspruch 1 oder 2, **dadurch gekennzeichnet, dass** man die Umwandlungslösung auf das Polymer sprüht.

**5.** Verfahren nach einem der Ansprüche 1 bis 4, **dadurch gekennzeichnet, dass** man den Brei filtert, um Verunreinigungen abzuscheiden.

**6.** Verfahren nach einem der Ansprüche 1 bis 5, **dadurch gekennzeichnet, dass** das Lösungsmittel der Umwandlungslösung aus der Gruppe Benzol, Chloroform, Methylenchlorid, Tetrachlorethylen, Tetrachlorkohlenstoff, Toluol oder Trichlorethylen ausgewählt wird.

**7.** Verfahren nach einem der Ansprüche 1 bis 6, **dadurch gekennzeichnet, dass** das Lösungsmittel der Umwandlungslösung Aceton ist.

**8.** Verfahren nach Anspruch 7, **dadurch gekennzeichnet, dass** die Umwandlungslösung zwischen 90 % und 99 %, vorzugsweise 94 % Volumenanteil Lösungsmittel enthält.

**9.** Verfahren nach einem der Ansprüche 1 bis 8, **dadurch gekennzeichnet, dass** das fettfreie Gleitmittel der Umwandlungslösung Glycerin ist.

**10.** Verfahren nach einem der Ansprüche 1 bis 9, **dadurch gekennzeichnet, dass** die Umwandlungslösung zwischen 1 % und 6 %, vorzugsweise zwischen 1 % und 2 % Volumenanteil Glycerin enthält.

**11.** Verfahren nach einem der Ansprüche 1 bis 10, **dadurch gekennzeichnet, dass** der Alkohol der Umwandlungslösung 95%-Ethanol ist.

**12.** Verfahren nach Anspruch 11, **dadurch gekennzeichnet, dass** die Umwandlungslösung zwischen 1 % und 6 %, vorzugsweise zwischen 1 % und 2 % Volumenanteil 95%-Ethanol enthält.

**13.** Verfahren nach einem der Ansprüche 1 bis 12, **dadurch gekennzeichnet, dass** das Polymer aufgeschäumtes Polystyrol (EPS) ist.

**14.** Polymerbrei bestehend aus aufgeschäumtes Polystyrol (EPS) oder einem aufgeschäumten Styrolcopolymer, **dadurch gekennzeichnet, dass** er geeignet ist, gemäß dem Verfahren nach einem der Ansprüche 1 bis 13 erhalten zu werden.

**15.** Mischung, die:

- als Hauptbestandteil ein Lösungsmittel, das ermöglicht, den physikalischen Zustand eines aufgeschäumten Polymers, welches aus aufgeschäumtes Polystyrol (EPS) oder einem aufgeschäumten Styrolcopolymer gebildet ist, von einem festen aufgeschäumten Zustand in einen nicht aufgeschäumten amorphen Zustand umzuwandeln, um einen Brei zu erhalten,

- einen geringen Anteil eines fettfreien Gleitmittels bestehend aus Glycerin oder Polytetrafluorethylen in einer Menge, welche ausreicht, dem Brei einen nichtklebenden Oberflächenzustand zu verleihen, und, gegebenenfalls,
- einen geringen Anteil eines Alkohols in einer Menge enthält, welche ausreicht, das Lösungsmittel und das Gleitmittel in der Lösung zu binden.

**16.** Mischung nach Anspruch 15, **dadurch gekennzeichnet, dass** sie 94 % bis 98 % Volumenanteil Azeton, 1 % bis 10 % Volumenanteil Glycerin und 1 % bis 6 % Volumenanteil 95%-Ethanol enthält.

**17.** Verwendung einer Mischung gemäß einem der Ansprüche 15 oder 16 zur Umwandlung eines aufgeschäumten, aus aufgeschäumtes Polystyrol (EPS) oder einem aufgeschäumten Styrolcopolymer gebildeten Polymers von einem festen aufgeschäumten Zustand in einen nicht aufgeschäumten amorphen Zustand, um einen Brei zu erhalten, welcher einen nichtklebenden Oberflächenzustand aufweist.

**18.** Fester, pastenartiger oder flüssiger Verbundstoff, der einen Brei gemäß Anspruch 14 enthält.

**19.** Fester Verbundstoff nach Anspruch 18, **dadurch gekennzeichnet, dass** er unter anderem feste organische Partikel, wie Holzpartikel, natürliche Fasern, Kunstfasern, oder feste nichtorganische Partikel, wie Metallpartikel, Glaspartikel, Tonstaub, Steinmehl oder Schiefermehl, enthält.

**20.** Flüssiger oder pastenartiger Verbundstoff nach Anspruch 18, **dadurch gekennzeichnet, dass** er als Klebstoff, als Firnis, als Lack, als Dichtung oder als Farbe ausgebildet ist.

Fig. 1

EP 1 002 009 B1

Fig. 2b

PSE 210

BROYAGE 212

214

270

230

232

POMPE 222

SOLUTION 220

POMPE 240

FILTRE 250

MAGMA 260

Fig. 2a

PSE 110

BROYAGE 112

100

130

132

SOLUTION 120

POMPE 122

POMPE 140

FILTRE 150

MAGMA 160

Fig. 3a

Fig. 3b

Fig. 4a

COUPE A. A

Fig. 4b

Fig.5a

400

435

432

MOTEUR

310

430

Fig.5b

Fig. 6

EP 1 002 009 B1

Fig.7

Fig. 8